# EUROPÄISCHE PATENTANMELDUNG

(11) **EP 1 275 599 A1**
(43) Veröffentlichungstag der Anmeldung: **15.01.2003**
(21) Anmeldenummer: 02014513.2
(22) Anmeldetag: 01.07.2002
(51) Int. Cl.: B65G 21/06, B65G 15/00, B65G 15/22, B23Q 7/14, B23P 21/00

(54) **Einrichtung für den Transfer von Werkstücken**

(30) Priorität: 09.07.2001 EP 01810678
(71) Anmelder: KOMAX HOLDING AG, 6036 Dierikon (CH)
(72) Erfinder: Fischer, Bruno, Masch. Ing. HTL, 8955 Oetwil (CH); Klingler, Markus, Masch. Tech. TS, 8155 Niederhasli (CH)
(74) Vertreter: Gaussmann, Andreas, Dr.

(57) **Zusammenfassung**

Bei dieser Fertigungslinie werden Kleinteile oder Leiterende mittels Werkstückträgern von Arbeitsstation zu Arbeitsstation transportiert. Eine erste und eine zweite Transfereinrichtung und eine Übergabeeinrichtung bewegen die Werkstückträger von Arbeitsstation zu Arbeitsstation. Die Einrichtungen bestehen je aus einer Trägereinheit (31) und aus einem Riemenmodul (41). Das Riemenmodul (41) wird von oben in die Trägereinheit (31) eingesetzt, wobei Schlitze (49) einer Radachse (46) und Nocken (59) einer Pulleyachse (55) vertikal ausgerichtet sind. Die Nocken (59) passen dann in die Schlitze (49), wodurch ein Zahnrad (19) des Riemenmoduls (41) mit dem Transferantrieb (8) gekoppelt ist. Zur Zentrierung kann noch eine Schraube (61) in eine Bohrung (58) der Pulleyachse (55) eingeführt werden und mit einem Gewindeloch (48) der Radachse (46) verschraubt werden. Das Riemenmodul (41) kann ohne Demontage des Transferantriebes (8) eingesetzt oder entfernt werden.

## Beschreibung

Die Erfindung betrifft eine Einrichtung für den Transfer von Werkstücken mittels Werstückträgern innerhalb einer Fertigungslinie mit mindestens einer Gruppe von Arbeitsstationen, wobei die Werkstückträger mittels mindestens einer Transfereinrichtung bewegbar sind.

Aus der Offenlegungsschrift DE 198 26 627 A1 ist eine Transfereinrichtung bekannt geworden, bei der Werkstücke mittels Werkstückträgern von Arbeitsstation zu Arbeitsstation einer Fertigungslinie transportiert werden. Die Arbeitsstationen sind in einer Linie angeordnet und mit Montagevorrichtungen und/oder Bearbeitungsvorrichtungen versehen. Eine erste Gruppe von Arbeitsstationen führt zeitintensive Arbeitsabläufe aus und eine zweite Gruppe von Arbeitsstationen führt weniger zeitintensive Arbeitsabläufe aus, wobei die erste Gruppe in Fertigungsrichtung gesehen der zweiten Gruppe vorgeschaltet ist. Eine erste Transfereinrichtung bewegt die Werkstückträger von Arbeitsstation zu Arbeitsstation der ersten Gruppe. Eine zweite Transfereinrichtung bewegt die Werkstückträger von Arbeitsstation zu Arbeitsstation der zweiten Gruppe. Eine Übergabeeinrichtung ist zwischen die beiden Transfereinrichtungen geschaltet, wobei die erste Transfereinrichtung die Werkstückträger der Übergabeeinrichtung übergibt und die Übergabeeinrichtung die Werkstückträger der zweiten Transfereinrichtung zuführt. Die Werkstückträger gelangen von der ersten Transfereinrichtung auf ein Transportband der Übergabeeinrichtung, wobei das Transportband die Werkstückträger vorpositioniert indem die Werkstückträger bis zu einem Stauelement bewegt werden. Einlaufseitig weist die zweite Transfereinrichtung einen Kupplungsabschnitt auf, der mittels einer Hubbewegung einen Werkstückträger am bodenseitigen Zahnprofil erfasst und an einen Riementrieb weiterleitet. Die Hubbewegung des Kupplungsabschnittes ist von einer Steuerwelle für die Arbeitsstationen der zweiten Gruppe abgeleitet.

Ein Nachteil der bekannten Einrichtung liegt darin, dass Verschleissteile wie Flachriemen, Zahnriemen, Teile der Spannvorrichtung, usw. nur mit einem erheblichen Demontageaufwand bzw. Montageaufwand ausgetauscht werden können.

Hier will die Erfindung Abhilfe schaffen. Die Erfindung, wie sie in Anspruch 1 gekennzeichnet ist, löst die Aufgabe, die Nachteile der bekannten Einrichtung zu vermeiden und eine unterhaltsfreundliche Transfereinrichtung zu schaffen.

Vorteilhafte Weiterbildungen der Erfindung sind in den abhängigen Patentansprüchen angegeben.

Die durch die Erfindung erreichten Vorteile sind im wesentlichen darin zu sehen, dass die Verschleissteile wie Zahnriemen oder Lager mit wenig Aufwand ausgetauscht werden können. Für die Unterhaltsarbeiten sind keine besonderen Kenntnisse der Mechanik notwendig. Die Verschleissteile sind in modulartigen Austauschelementen integriert. Mit der erfindungsgemässen Einrichtung sind kurze Stillstandszeiten der gesamten Fertigungsanlage realisierbar, was sich wiederum positiv auf die Produktivität auswirkt. Ausserdem kann die Einrichtung für den Transfer der Werkstückträger mechanisch wesentlich einfacher gebaut werden, was sich wiederum günstig auf die Herstellungskosten der Fertigungsanlage auswirkt. Zudem kommt die Einrichtung mit weniger
Verschleissteilen aus, was die Zuverlässigkeit erhöht und den Aufwand an Unterhalt verkleinert.

Anhand der beiliegenden Figuren wird die vorliegende Erfindung näher erläutert.

Es zeigen:
Fig. 1
   eine Fertigungslinie mit Arbeitsstationen und einer Einrichtung für den Transfer von Werkstückträgern,
Fig. 2
   eine erste Transfereinrichtung, eine Übergabeeinrichtung und eine zweite Transfereinrichtung mit den zugehörigen Antriebsmotoren und Sensoren zur Erfassung der Lage der Werkstückträger bzw. der Zahnradstellung,
Fig. 3
   eine schematische Darstellung eines Werkstückträgers beim Übergang von einer Transfereinrichtung auf eine Übergabeeinrichtung, bzw. beim Übergang von einer Übergabeeinrichtung auf eine Transfereinrichtung,
Fig. 4
   eine Ansicht von unten einer Trägereinheit für die Transfereinrichtung oder für die Übergabeeinrichtung,
Fig. 5
   eine Seitenansicht der Trägereinheit,
Fig. 6
   eine Seitenansicht eines Riemenmoduls,
Fig. 7
   eine Draufsicht des Riemenmoduls,
Fig. 8
   einen Schnitt durch ein Zahnrad,
Fig. 9
   einen Transferantrieb bzw. einen Übergabeantrieb,
Fig. 10
   ein Umlenkrad eines Riementriebs für den Rücklauf der Werkstückträger,
Fig. 11 und Fig. 12
   eine Kupplungseinrichtung zum Übertragen der Riemenbewegung der Transfereinrichtung auf eine Verlängerung.

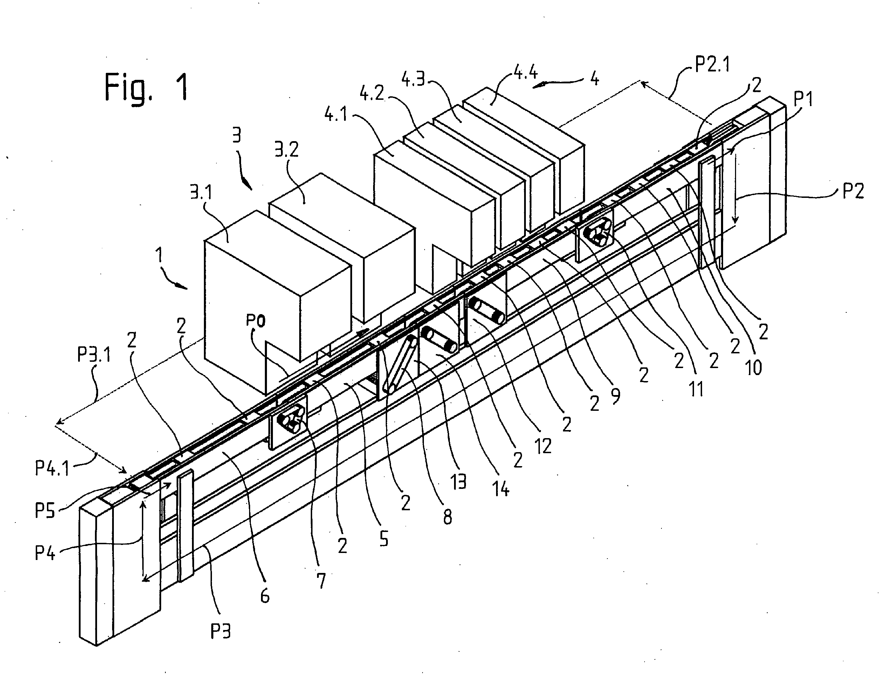

Fig. 1 zeigt eine Fertigungslinie 1 zur Bearbeitung von Werkstücken, beispielsweise Kleinteilen oder Leiterenden, welche mittels Werkstückträgern 2 von Arbeitsstation zu Arbeitsstation transportiert werden. Die Fertigungsrichtung ist mit einem Pfeil P0 symbolisiert. Die Arbeitsstationen sind in einer Linie angeordnet und mit Montagevorrichtungen und/oder Bearbeitungsvorrichtungen versehen, wobei eine erste Gruppe 3 mit grossen Arbeitsstationen 3.1,3.2 und eine zweite Gruppe 4 mit kleinen Arbeitsstationen 4.1,4.2,4.3,4.4 vorgesehen ist. Die erste Gruppe 3 bedingt einen grossen Abstand von Werkstückträger 2 zu Werkstückträger 2 (grosses Rastermass), die zweite Gruppe 4 bedingt einen kleinen Abstand von Werkstückträger 2 zu Werkstückträger 2 (kleines Rastermass). Im gezeigten Ausführungsbeispiel führt die erste Gruppe 3 von Arbeitsstationen 3.1,3.2 weniger zeitintensive Arbeitsabläufe aus als die zweite Gruppe 4 von Arbeitsstationen 4.1,4.2,4.3,4.4. Die Arbeitsabläufe der ersten Gruppe 3 können auch gleich zeitintensiv oder zeitintensiver sein als die Arbeitsabläufe der zweiten-Gruppe 4.

Eine erste Transfereinrichtung 5 und eine erste Verlängerung 6 bewegen die Werkstückträger 2 von Arbeitsstation zu Arbeitsstation der ersten Gruppe 3, wobei die erste Transfereinrichtung 5 die erste Verlängerung 6 mittels einer ersten Kopplungseinrichtung 7 mechanisch antreibt. Ein erster Transferantrieb 8 treibt die erste Transfereinrichtung 5 an.

Eine zweite Transfereinrichtung 9 und eine zweite Verlängerung 10 bewegen die Werkstückträger 2 von Arbeitsstation zu Arbeitsstation der zweiten Gruppe 4, wobei die zweite Transfereinrichtung 9 die zweite Verlängerung 10 mittels einer zweiten Kopplungseinrichtung 11 mechanisch antreibt. Ein zweiter Transferantrieb 12 treibt die zweite Transfereinrichtung 9 an.

Mit den Verlängerungen 6,10 wird erreicht, dass die Riementriebe der Transfereinrichtungen 5,9 wegen der Riemenelastizität nicht zu lang werden, was sich positiv auf die Positioniergenauigkeit der Werkstückträger 2 auswirkt.

Eine als Übergabeeinrichtung 13 bezeichnete Transfereinrichtung mit einem Übergabeantrieb 14 ist zwischen die beiden Transfereinrichtungen 5,9 geschaltet, wobei die erste Transfereinrichtung 5 die Werkstückträger 2 der Übergabeeinrichtung 13 übergibt und die Übergabeeinrichtung 13 die Werkstückträger 2 der zweiten Transfereinrichtung 9 zuführt. Die Übergabeeinrichtung 13 dient als Adapter für die unterschiedlichen Rastermasse der ersten Gruppe 3 und der zweiten Gruppe 4.

Falls mehr als zwei Gruppen von Arbeitsstationen vorgesehen sind, sind auch mehr als zwei Transfereinrichtungen und mehr als eine Übergabeeinrichtung vorgesehen.

Der Rücklauf der Werkstückträger 2 ist mit Pfeilen P1,P2,P3,P4 und P5 symbolisiert, wobei P1,P3,P5 beispielsweise horizontale Riementriebe sind und P2,P4 vertikale Fördereinrichtungen für die Werkstückträger 2 sind. Als Variante kann der Rücklauf der Werkstückträger 2 ausschliesslich in der horizontalen Ebene erfolgen. Diese Rücklaufvariante ist mit den Pfeilen P1,P2.1,P3.1,P4.1 und P5 symbolisiert.

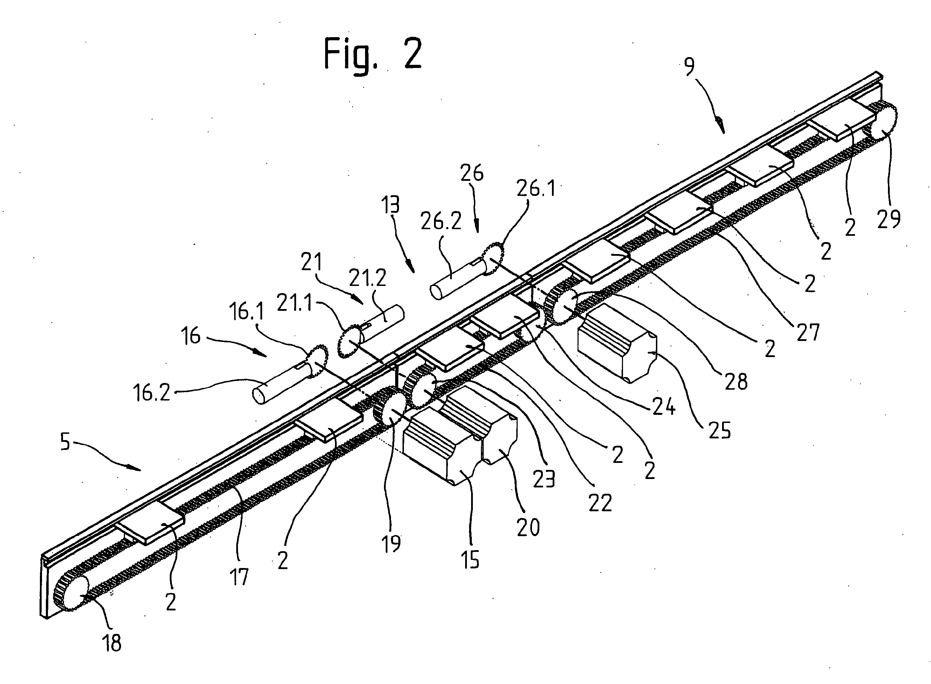

Fig. 2 zeigt die erste Transfereinrichtung 5 mit einem ersten Antriebsmotor 15, mit einem ersten Sensor 16, mit einem ersten doppelseitigen Zahnriemen 17, der mittels eines ersten Zahnrades 18 und mittels eines zweiten Zahnrades 19 umgelenkt wird, wobei der erste Antriebsmotor 15 auf das zweite Zahnrad 19 einwirkt. Der erste Sensor 16 besteht aus einer ersten Zahnscheibe 16.1, die die Zähne des zweiten Zahnrades 19 abbildet und aus einem ersten Abtaster 16.2, der die Zähne der rotierenden ersten Zahnscheibe 16.1 erfasst. Die erste Transfereinrichtung 5 transportiert zwei Werkstückträger 2.

Fig. 2 zeigt die Übergabeeinrichtung 13 mit einem zweiten Antriebsmotor 20, mit einem zweiten Sensor 21, mit einem zweiten doppelseitigen Zahnriemen 22, der mittels eines dritten Zahnrades 23 und mittels eines vierten Zahnrades 24 umgelenkt wird, wobei der zweite Antriebsmotor 20 auf das dritte Zahnrad 23 einwirkt. Der zweite Sensor 21 besteht aus einer zweiten Zahnscheibe 21.1, die die Zähne des dritten Zahnrades 23 abbildet und aus einem zweiten Abtaster 21.2, der die Zähne der rotierenden zweiten Zahnscheibe 21.1 erfasst. Die Übergabeeinrichtung 13 transportiert zwei Werkstückträger 2.

Fig. 2 zeigt die zweite Transfereinrichtung 9 mit einem dritten Antriebsmotor 25, mit einem dritten Sensor 26, mit einem dritten doppelseitigen Zahnriemen 27, der mittels eines fünften Zahnrades 28 und mittels eines sechsten Zahnrades 29 umgelenkt wird, wobei der dritte Antriebsmotor 25 auf das fünfte Zahnrad 28 einwirkt. Der dritte Sensor 26 besteht aus einer dritten Zahnscheibe 26.1, die die Zähne des fünften Zahnrades 28 abbildet und aus einem dritten Abtaster 26.2, der die Zähne der rotierenden dritten Zahnscheibe 26.1 erfasst. Die zweite Transfereinrichtung 9 transportiert vier Werkstückträger 2.

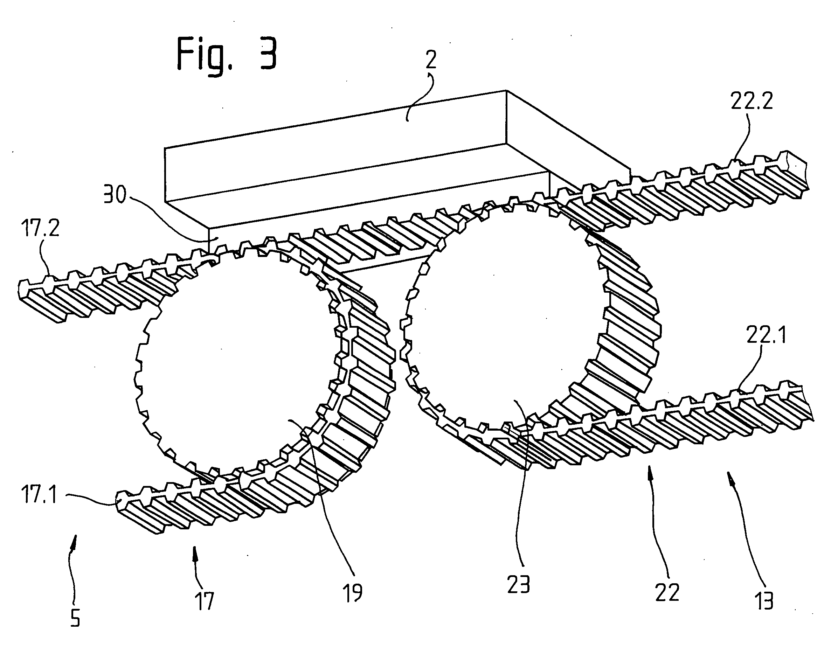

Fig. 3 zeigt eine schematische Darstellung eines Werkstückträgers 2 beim Übergang von der ersten Transfereinrichtung 5 auf die Übergabeeinrichtung 13, bzw. beim Übergang von der Übergabeeinrichtung 13 auf die zweite Transfereinrichtung 9. Der doppelseitige erste Zahnriemen 17 der ersten Transfereinrichtung 5 dient als Transportmittel für den Werkstückträger 2, wobei die Zähne 17.1 der einen Riemenseite in die Zahnräder 18,19 eingreifen und die Zähne 17.2 der anderen Riemenseite in ein and der Unterseite des Werkstückträgers 2 angeordnetes Zahnprofil 30 eingreifen. Der doppelseitige zweite Zahnriemen 22 der Übergabeeinrichtung 13 dient als Transportmittel für den Werkstückträger 2, wobei die Zähne 22.1 der einen Riemenseite in die Zahnräder 23,24 eingreifen und die Zähne 22.2 der anderen Riemenseite in das and der Unterseite des Werkstückträgers 2 angeordnete Zahnprofil 30 eingreifen. Dasselbe gilt für den Übergang des Werkstückträgers 2 von der Übergabeeinrichtung 13 auf die zweite Transfereinrichtung 5. Der Transport des Werkstückträgers 2 innerhalb der Fertigungsrichtung P0 erfolgt somit ausschliesslich mittels Formschluss zwischen Zahnriemen 17,22,27 und dem Werkstückträger 2 ohne mechanische Kopplung zwischen erster Transfereinrichtung 5 und der Übergabeeinrichtung 13 bzw. zwischen der Übergabeeinrichtung 13 und der zweiten Transfereinrichtung 9.

Die nachfolgend dargestellte Einrichtung bezieht sich mit den Bezugszeichen auf die erste Transfereinrichtung 5. Die zweite Transfereinrichtung 8 oder die Übergabeeinrichtung 13 sind mechanisch vergleichbar aufgebaut wie die erste Transfereinrichtung 5.

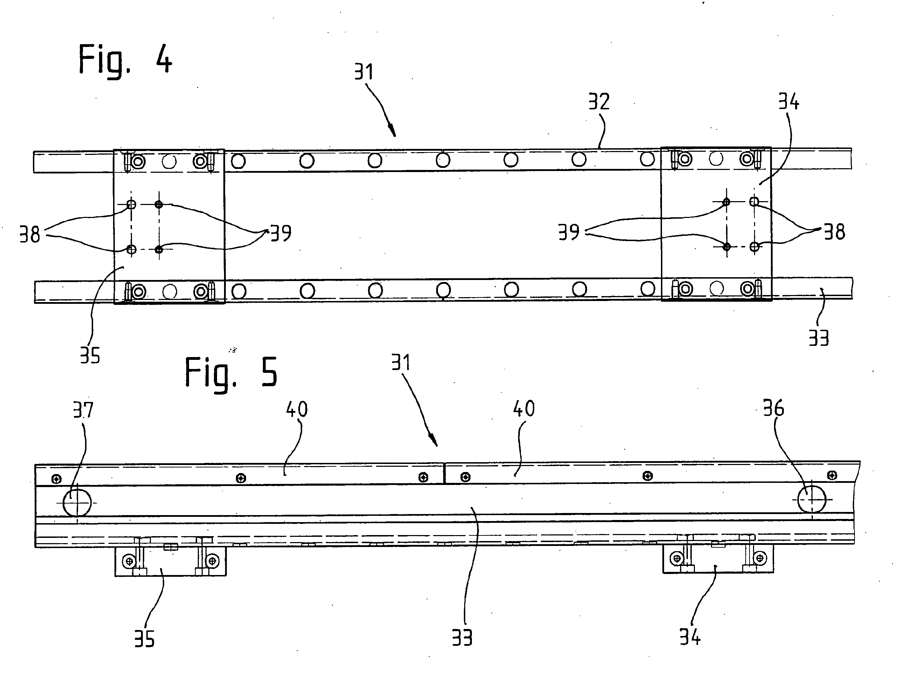

Fig. 4 und Fig. 5 zeigen eine Trägereinheit 31 der Transfereinrichtung 5,9 oder der Übergabeeinrichtung 13. Die Trägereinheit 31 bestimmt die Länge der Transfereinrichtung 5,9 bzw. der Übergabeeinrichtung 13. In einer weiteren Variante kann auch nur eine Trägereinheit 31 vorgesehen sein, die sich über die gesamte Länge der Fertigungslinie 1 erstreckt.

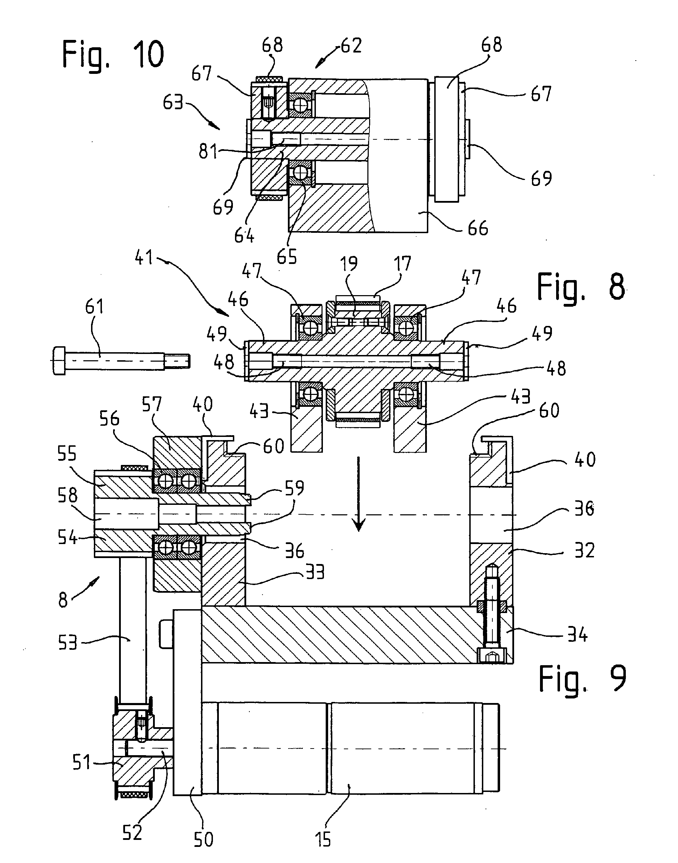

Die Trägereinheit 31 besteht im wesentlichen aus einer ersten Seitenwand 32 und einer zweiten Seitenwand 33, die mittels einer ersten Platte 34 und einer zweiten Platte 35 verbunden sind. An den Seitenwänden 32,33 sind Durchgangslöcher 36,37 vorgesehen, die dem ersten Transferantrieb 8 oder der ersten Kopplungseinrichtung 7 dienen. An den Platten 34,35 sind Stifte 38 und Gewindelöcher 39
vorgesehen. An den Seitenwänden 32,33 sind abnehmbare Winkel 40 angeordnet, die der Führung der Werkstückträger 2 dienen. Ohne Winkel 40 kann der Werkstückträger 2 nach oben entfernt werden. (Siehe Fig. 9).

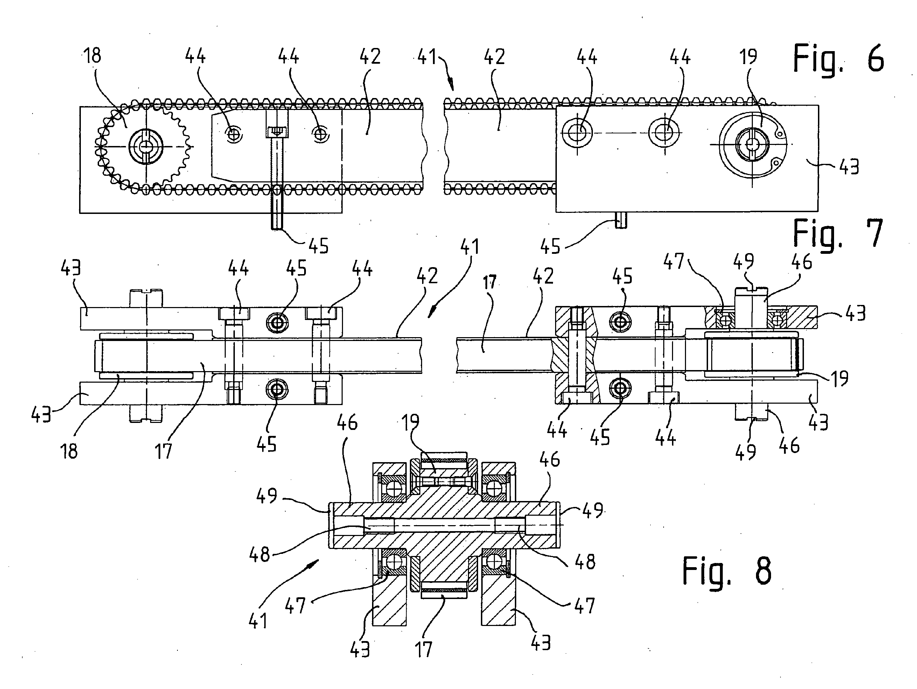

Fig. 6 und Fig. 7 zeigen ein Riemenmodul 41, das in die Trägereinheit 31 einsetzbar ist. Das Riemenmodul 41 besteht aus einem Schwert 42, an dem je Ende und je Seite eine Wange 43 angeordnet ist. Je Schwertende sind zwei Wangen 43 mittels Schrauben 44 am Schwertende festgeklemmt, wobei die Wangen 43 je Schwertende als Träger für das erste Zahnrad 18 bzw. als Träger für das zweite Zahnrad 19 dienen. Das Riemenmodul 41 wird mittels Schrauben 45 mit der Trägereinheit 31 lösbar verbunden, wobei die Schrauben 45 in die Gewindelöcher 39 der Platten 34 passen.

Fig. 8 zeigt einen Schnitt durch das zweite Zahnrad 19. Eine Radachse 46 des Zahnrades 19 ist mittels Lagern 47 an den Wangen 43 gelagert. Je Achsende ist ein Gewindeloch 48 und ein Schlitz 49 vorgesehen.

Fig. 9 zeigt einen Transferantrieb 8,12 bzw. einen Übergabeantrieb 14, der an der Trägereinheit 31 angeordnet ist. Der erste Antriebsmotor 15 ist an einer Konsole 50 angeordnet, die in Verbindung mit der Platte 34 der Trägereinheit 31 steht. Ein Antriebspulley 51 überträgt die Rotationsbewegung der Motorwelle 52 mittels Zahnriemen 53 auf ein Abtriebspulley 54, dessen Achse 55 an Lagern 56 eines Lagerblockes 57 gelagert ist. Der Lagerblock 57 steht in Verbindung mit der Seitenwand 32,33 der Trägereinheit 31, wobei die Pulleyachse 55 durch das Durchgangsloch 36 reicht. Am einen Ende der Pulleyachse 55 ist eine Bohrung 58 und am anderen Ende der Pulleyachse 55 sind Nocken 59 vorgesehen. Mit 60 ist ein Absatz der Seitenwand 32,33-bezeichnet, der zusammen mit dem Winkel 40 die Führung für die Werkstückträger bildet.

Das Riemenmodul 41 wird von oben in die Trägereinheit 31 eingesetzt, wobei die Schlitze 49 der Radachse 46 und die Nocken 59 der Pulleyachse 55 vertikal ausgerichtet sind. Die Nocken 59 passen dann in die Schlitze 49, wodurch das Zahnrad 19 des Riemenmoduls 41 mit dem Transferantrieb 8 gekoppelt ist. Zur Zentrierung kann noch eine Schraube 61 in die Bohrung 58 der Pulleyachse 55 eingeführt werden und mit dem Gewindeloch 48 der Radachse 46 verschraubt werden. Nach dem Einsetzen des Riemenmoduls 41 werden die Schrauben 45 des Riemenmoduls 41 festgezogen. Das Riemenmodul 41 kann ohne Demontage des Transferantriebes 8 eingesetzt oder entfernt werden.

Fig. 10 zeigt ein Umlenkrad 62 eines Riementriebs 63 für den Rücklauf der Werkstückträger 2. Die mit einem Gewindeloch 81 versehene Radachse 64 des Umlenkrades 62 ist an den Enden vergleichbar mit der Radachse 46 des Zahnrades 19 ausgebildet. Die mittels Lager 65 an einem Gehäuse 66 abgestützte Radachse 64 weist je Ende eine Riemenscheibe 67 auf, mittels der ein Flachriemen 68 umlenkbar ist. Der Riementrieb 63 kann anstelle des Riemenmoduls 41 in die Einrichtung gemäss Fig. 9 eingesetzt werden. Die Nocken 59 der Pulleyachse 55 passen in die an den Enden der Radachse 64 vorgesehenen Schlitze 69. Die Trägereinheit 31 mit dem Antrieb 8 kann somit auch für den Aufbau der Rücklaufeinrichtung verwendet werden.

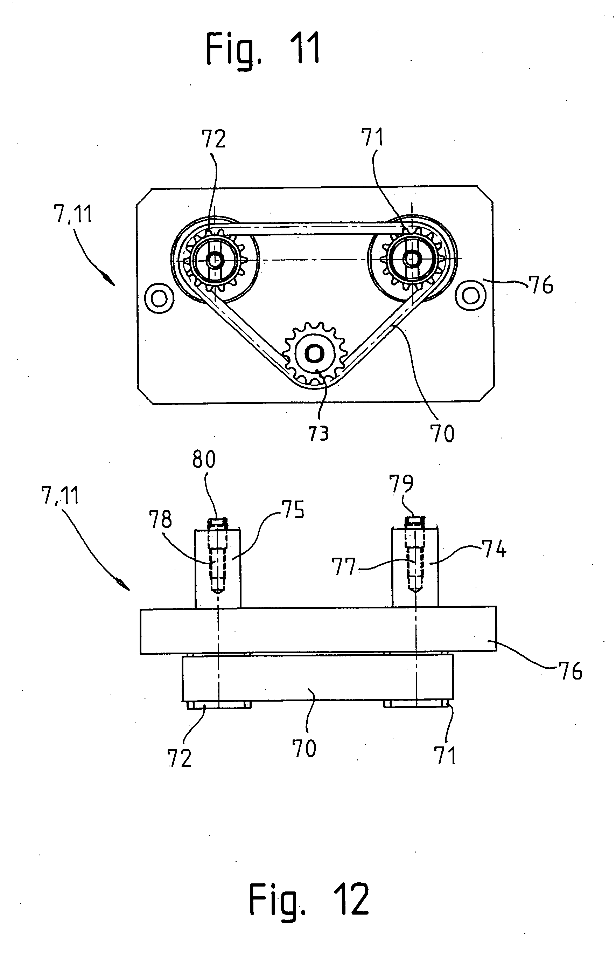

Fig. 11 und Fig. 12 zeigen die erste Kopplungseinrichtung 7 zum Übertragen der Riemenbewegung des Riemens 17 der ersten Transfereinrichtung 5 auf die erste Verlängerung 6, die wiederum aus einer Trägereinheit 31 und aus einem Riemenmodul 41 besteht. Die Verlängerung 6 ist Teil der Transfereinrichtung 5. Eine Längenunterteilung der Transfereinrichtung 5 ist wegen der Elastizität des Zahnriemens 17 und der damit zusammenhängenden Positioniergenauigkeit der Werkstückträger 2 notwendig. Die zweite Kopplungseinrichtung 11 ist vergleichbar mit der ersten Kopplungseinrichtung 7 aufgebaut. Ein Zahnriemen 70 ist über Zahnräder 71,72 und über ein Spannrad 73 geführt. Die Achsen 74,75 der Zahnräder 71,72 sind an einer Trägerplatte 76 gelagert. Die Achsen 74,75 sind vergleichbar ausgebildet wie die Pulleyachse 55 und weisen Bohrungen 77,78 und Nocken 78,79 auf. Die Kopplungseinrichtung 7 kann auf der Transferantriebsseite oder auf der gegenüberliegenden Seite an der Seitenwand 32,33 angeordnet werden, wobei die Achse 74,75 das Durchgangsloch 36 durchdringt. Die eine Achse 74 wird mittels der Nocken 79 vom ersten Zahnrad 18 angetrieben und die andere Achse 75 treibt mittels der Nocken 80 das Zahnrad der ersten Verlängerung 6 an.

## Patentansprüche

1. Einrichtung für den Transfer von Werkstücken mittels Werstückträgern innerhalb einer Fertigungslinie mit mindestens einer Gruppe von Arbeitsstationen, wobei die Werkstückträger mittels mindestens einer Transfereinrichtung bewegbar sind,
**dadurch gekennzeichnet,**
**dass** die Transfereinrichtung (5) eine Trägereinheit (31) und ein in die Trägereinheit (31) einsetztbares Riemenmodul (41,63) aufweist, wobei an der Trägereinheit (31) ein Transferantrieb (8) angeordnet ist, der mindestens einen die Werkstückträger (2) bewegenden Riemen (17,68) des Riemenmoduls (41,63) antreibt.

2. Einrichtung nach Anspruch 1,
**dadurch gekennzeichnet,**
**dass** das Riemenmodul (41) ein Schwert (42) und an den Enden des Schwertes (42) angeordnete Wangen (43) aufweist, die als Träger für den Riemen (17) antreibende und umlenkende Zahnräder (18,19) dienen.

3. Einrichtung nach den Ansprüchen 1 oder 2,
**dadurch gekennzeichnet,**
**dass** die Trägereinheit (31) Seitenwände (32,33) und die Seitenwände (32,33) verbindende Platten (34,35) aufweist, wobei das Riemenmodul (41,63) mit den Platten (34,35) lösbar verbindbar ist.

4. Einrichtung nach Anspruch 3,
**dadurch gekennzeichnet,**
**dass** der an einer Seitenwand (32,33) der Trägereinheit (31) angeordnete Transferantrieb (8) eine Pulleyachse (55) eines Abtriebspulleys (54) aufweist, die durch ein Durchgangsloch (36,37) der Seitenwand (32,33) reicht und am freien Ende Nocken (59) aufweist.

5. Einrichtung nach Anspruch 4,
**dadurch gekennzeichnet,**
**dass** eine Radachse (46,64) eines Zahnrades (18,19,67) je Ende einen Schlitz (49,69) aufweist, in den beim Einsetzen des Riemenmoduls (41,63) in die Trägereinheit (31) die Nocken (59) der Pulleyachse (55) eingreifen.

6. Einrichtung nach einem der vorhergehenden Ansprüche,
**dadurch gekennzeichnet,**
**dass** mindestens eine an einer Seitenwand (32,33) der Trägereinheit (31) anbringbare Kopplungseinrichtung (7) zum Übertragen der Riemenbewegung des Riemens (17) auf einen weiteren Riemen vorgesehen ist.

7. Einrichtung nach Anspruch 6,
**dadurch gekennzeichnet,**
**dass** die Kopplungseinrichtung (7) riemengetriebene Räder (71,72) aufweist, deren Achsen (74,75) je durch ein Durchgangsloch (36,37) der Seitenwand (32,33) reichen und jede Achse (74,75) am freien Ende Nocken (79,80) aufweist, die beim Einsetzen des Riemenmoduls (41,63) in die Trägereinheit (31) in Schlitze (49,69) der Radachse (46,64) des Zahnrades (18,19,67) des Riemenmoduls (41,63) eingreifen.
